# FASCICULE DE BREVET EUROPEEN

(11) **EP 3 569 929 B1**
(45) Date de publication et mention de la délivrance du brevet: **28.07.2021**
(21) Numéro de dépôt: 19174669.2
(22) Date de dépôt: 15.05.2019
(51) Int. Cl.: F23R 3/00, F02C 7/266, F23R 3/06, F23R 3/50, F23R 3/60

(54) **ENSEMBLE POUR UNE CHAMBRE DE COMBUSTION DE TURBOMACHINE**
EINHEIT FÜR EINE BRENNKAMMER EINES TURBOTRIEBWERKS
ASSEMBLY FOR A TURBINE ENGINE COMBUSTION CHAMBER

(30) Priorité: 16.05.2018 FR 1854082
(43) Date de publication de la demande: 20.11.2019
(73) Titulaire: SAFRAN AIRCRAFT ENGINES, 75015 Paris (FR)
(72) Inventeur: BUNEL, Jacques Marcel Arthur, 77550 MOISSY-CRAMAYEL (FR); JEAN, Pierrick Bernard, 77550 MOISSY-CRAMAYEL (FR)
(74) Mandataire: Ernest Gutmann - Yves Plasseraud S.A.S.

(56) Documents cités:
- EP-A1- 3 220 049
- CA-A1- 2 925 565
- FR-A1- 3 009 747
- FR-A1- 3 055 950
- GB-A- 2 017 827
- US-A1- 2014 331 674

## Description

### DOMAINE

La présente invention concerne un ensemble pour une chambre de combustion d'une turbomachine.

### CONTEXTE

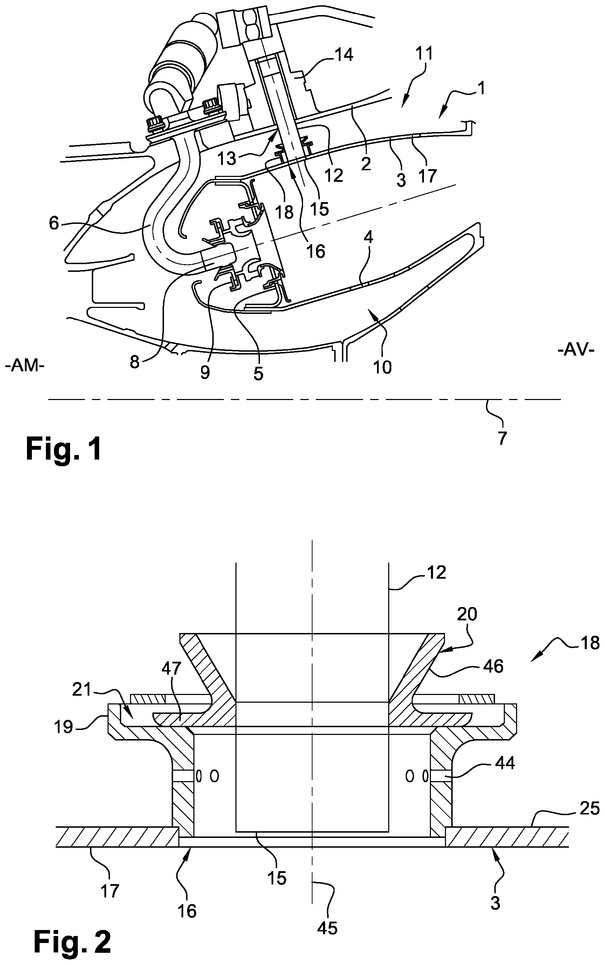

La figure 1 illustre une chambre annulaire de combustion 1 pour une turbomachine de l'art antérieur. La chambre de combustion 1 comporte une chambre annulaire de combustion montée dans un carter annulaire externe 2. La chambre de combustion 1 comprend une virole externe 3 de révolution, une virole interne 4 de révolution, et un fond de chambre 5 sur lesquels sont montés des carénages s'étendant vers l'amont. Les termes amont et aval sont définis par rapport au sens de circulation des flux de gaz dans la turbomachine et sont référencés respectivement AM et AV sur la figure 1.

Des cannes 6 d'injection de carburant, réparties autour de l'axe de la turbomachine 7, débouchent dans le fond de chambre 5, par des têtes d'injection 8. Des systèmes d'injection 9 sont disposés autour de chaque tête d'injection 8.

Le flux d'air fourni par le compresseur de la turbomachine est guidé par les carénages et est partagé en une veine centrale destinée à alimenter la chambre de combustion 1 et en deux veines périphériques 10, 11 destinées à contourner la chambre de combustion 1 et formant de l'air de refroidissement.

Les systèmes d'injection 9 forment un flux d'air entrant de manière tourbillonnante dans une zone de combustion primaire de la chambre de combustion 1. Cet air est mélangé au carburant pulvérisé par les têtes d'injection 8, le mélange étant allumé par au moins une bougie 12.

La bougie 12 est montée, par son extrémité externe, dans un orifice 13 du carter externe 2, par l'intermédiaire d'un dispositif de fixation 14. L'extrémité interne 15 de la bougie 12 traverse un orifice 16 ménagé dans la virole externe 3, jusqu'à affleurer sensiblement la paroi intérieure 17 de la virole externe 3.

L'orifice 16 de la virole externe 3 est équipé de moyens de guidage 18 de la bougie 12, mieux visibles à la figure 2. Les moyens de guidage 18 comprennent une cheminée tubulaire 19 fixée sur la virole externe 3 et débouchant dans la chambre 1 par ledit orifice 16, ainsi qu'un guide 20 entourant la bougie 12 et monté avec un jeu axial et transversal dans une gorge 21 de la cheminée 19 sur la cheminée 19.

Les virole interne et externe 4, 3 de la chambre de combustion 1 comportent des orifices d'entrée d'air primaire 22 et d'air de dilution 23, et des zones présentant des multiperforations 24 pour le passage d'air de refroidissement.

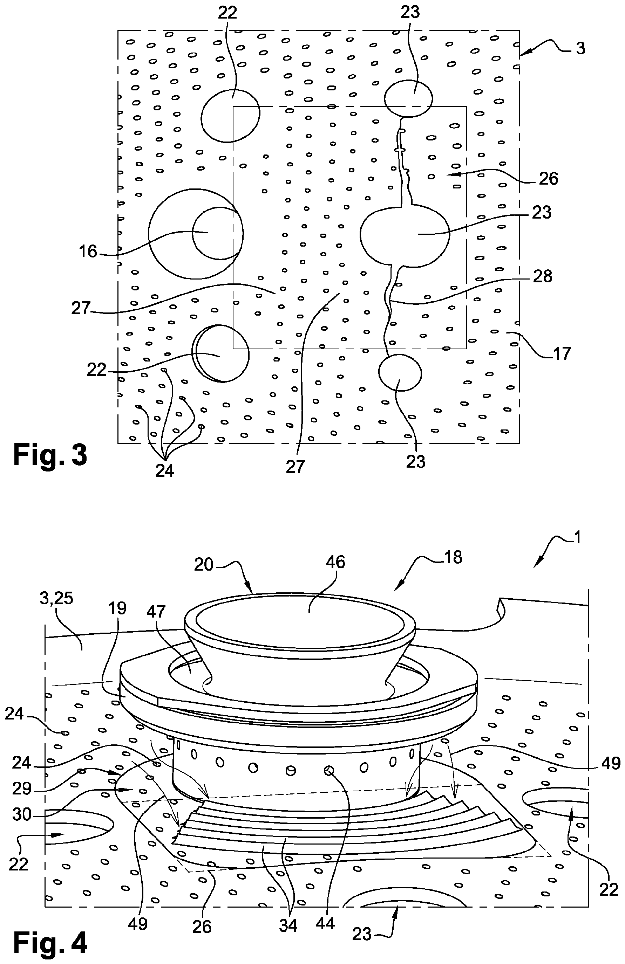

L'air de refroidissement circule axialement de l'amont vers l'aval le long de la paroi externe 25 de la virole externe 3. Les moyens de guidage 18 de la bougie 12 (ou de façon plus générale, tout élément en saillie) forment un obstacle perturbant l'écoulement de l'air de refroidissement dans la zone 26 située directement en aval desdits moyens de guidage 18. Il apparaît que cette perturbation entraîne une diminution de l'efficacité du refroidissement dans cette zone 26, pouvant provoquer des phénomènes de brûlure 27 et d'amorces de criques 28, illustrées à la figure 3, fragilisant la structure de la virole.

Le document FR 3 009 747 A1, considéré comme l'état de la technique le plus proche, décrit le préambule de la revendication 1.

### RESUME DE L'INVENTION

L'invention a notamment pour but d'apporter une solution simple, efficace et économique à ces problèmes.

A cet effet, l'invention concerne un ensemble pour une chambre de combustion d'une turbomachine selon l'objet de la revendication 1.

Les termes intérieur et extérieur définissant les parois sont donnés par référence au foyer délimité par la chambre de combustion. On notera que la chambre de combustion peut comporter une virole annulaire radialement interne et une virole annulaire radialement externe. Les termes radial et axial sont définis par rapport à l'axe de la turbomachine, qui est également l'axe de la virole. La virole concernée par l'invention peut être la virole radialement externe ou la virole radialement interne. La paroi dite intérieure de la virole interne est alors formée par la paroi radialement externe de ladite virole radialement interne. Par ailleurs, la paroi dite extérieure de la virole interne est formée par la paroi radialement interne de ladite virole radialement interne.

La présence du déflecteur en aval de l'élément en saillie et le fait que le déflecteur s'étende circonférentiellement permet d'amener une partie du flux d'air dévié par l'élément en saillie vers la zone moins favorisée par la circulation du flux d'air. L'air pénètre ensuite dans la chambre de combustion, au travers des perforations. Ceci permet d'améliorer sensiblement le refroidissement de la virole dans la zone située directement en aval de l'élément en saillie.

La distance axiale entre l'élément en saillie et l'un au moins des déflecteurs peut être comprise entre 1 et 5 mm. La forme du déflecteur peut être adaptée à la forme de l'élément en saillie.

Le déflecteur peut présenter une forme générale courbe.

De façon plus générale, le déflecteur peut présenter une forme complémentaire à celle de l'élément en saillie.

La forme courbe, par exemple en arc de cercle ou en portion d'ellipse, apparaît en particulier en vue de dessus, c'est-à-dire selon un axe orienté perpendiculairement à l'axe de la virole.

Une telle forme est particulièrement adaptée au cas où l'élément en saillie présente une forme complémentaire circulaire ou courbe. L'élément en saillie est par exemple cylindrique Dans le cas d'un élément en saille circulaire, le déflecteur courbe peut être sensiblement coaxial.

Au moins un déflecteur peut s'étendre circonférentiellement de part et d'autre de l'élément en saillie de part et d'autre de l'élément en saillie.

En d'autres termes, d'une vue de l'amont vers l'aval, au moins un déflecteur dépasse circonférentiellement de part et d'autre de l'élément en saillie. Une telle caractéristique permet d'augmenter le débit d'air capté par le déflecteur concerné.

Certaines au moins des perforations peuvent être situées à proximité du déflecteur, de façon à positionner les perforations le plus proche possible du déflecteur tout en respectant les contraintes de fabrication.

De cette manière, l'air capté par les déflecteurs circule le long des déflecteurs puis est amené vers l'intérieur de la chambre de combustion, au travers des perforations situées directement en amont du déflecteur. Il peut être nécessaire de réduire la distance entre les déflecteurs et les perforations concernées de manière à éviter la stagnation de l'air et éviter que la température de l'air augmente localement dans cette zone, réduisant l'efficacité du refroidissement.

Les perforations peuvent être ménagées, au moins en partie, dans la base du déflecteur, c'est-à-dire au niveau de la zone de liaison entre le déflecteur et la virole.

L'ensemble peut comporter une pluralité de déflecteurs décalés axialement les uns des autres, des perforations étant ménagées axialement entre l'élément en saillie et le déflecteur, et axialement entre les déflecteurs.

Ainsi, pour chaque déflecteur, des perforations sont situées en amont, voire directement en amont, du déflecteur.

L'utilisation de plusieurs déflecteurs permet de maximiser le débit d'air capté et guidé par les déflecteurs, vers la zone critique située directement en aval de l'élément en saillie. On améliore ainsi le refroidissement dans cette zone.

L'utilisation de plusieurs déflecteurs permet également d'augmenter la surface d'échange de chaleur entre la virole et l'air de refroidissement.

La distance entre l'extrémité extérieure de chaque déflecteur et la paroi externe de la virole peut augmenter progressivement de l'amont vers l'aval et/ou circonférentiellement, depuis une zone circonférentiellement médiane du déflecteur par exemple.

En d'autres termes, la taille radiale des déflecteurs augmente progressivement de l'amont vers l'aval, ce qui permet de mieux capter et guider l'air.

L'ensemble peut comporter une platine, les déflecteurs étant formés sur la platine, l'organe en saillie étant monté ou formé sur la platine, la platine étant fixée sur la virole et formant une partie de ladite virole.

La platine peut être fixée par soudage ou par brasage sur la virole.

La platine peut être réalisée par un procédé de fabrication additive, notamment pas fusion ou frittage sélective de poudres à l'aide d'un laser ou d'un faisceau d'électrons, par exemple.

L'élément en saillie peut comporter des moyens de guidage d'une bougie d'allumage.

Les moyens de guidage de la bougie peuvent comporter une cheminée tubulaire fixée sur la virole externe ou sur la platine, et débouchant dans la chambre par un orifice de la virole externe ou de la platine, ainsi qu'un guide annulaire entourant la bougie et monté avec un jeu axial et transversal sur la cheminée.

La virole et/ou la platine peuvent comporter des perforations, appelées également multiperforations, du fait de leur nombre important, comme cela est connu en soi. La virole peut également comporter des trous permettant le passage d'air dit primaire et des trous permettant le passage d'air de dilution. Les trous d'air de dilution sont situés axialement en aval des trous d'air primaire.

Les perforations situées à proximité des déflecteurs peuvent présenter un diamètre compris entre 0,2 et 1 mm, de préférence entre 0,4 et 0,6 mm. Les multiperforations de la virole et/ou de la platine, peuvent présenter un diamètre compris entre 0,2 et 1 mm, de préférence entre 0,4 et 0,6 mm. Les multiperforations peuvent être réalisées par perçage laser et/ou par fabrication additive.

Les perforations et/ou les multiperforations peuvent être inclinées par rapport à la paroi extérieure de la virole, d'un angle compris entre 10 et 50°, par exemple de l'ordre de 30°. Les perforations et/ou les multiperforations peuvent être situées au moins en partie, dans un plan passant par l'axe de la virole. En variante, une partie au moins des perforations et/ou des multiperforations peut être formée dans un ou plusieurs plans formant un angle avec l'axe de la virole, par exemple un angle compris entre 30 et 90° inclus. De telles perforations ou multiperforations sont qualifiées de giratoires.

Les trous d'air primaire peuvent présenter un diamètre compris entre 1 et 15 mm et les trous d'air de dilution peuvent présenter un diamètre compris entre 4 et 12 mm.

Les multiperforations de la platine peuvent être réalisées après fixation de la platine sur le reste de la virole. Dans le cas où un revêtement formant une barrière thermique est appliqué sur la paroi intérieure de la virole, et en particulier sur les perforations situées à proximité des déflecteurs, un tel revêtement peut boucher lesdites perforations. Afin de déboucher lesdites perforations, un traitement de débouchage par jet d'eau peut être utilisé. Le revêtement formant la barrière thermique est par exemple réalisé à base de zirconate d'yttrium.

L'invention concerne également une turbomachine pour un aéronef comportant un ensemble du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue en coupe axiale d'une chambre de combustion de l'art antérieur ;
- la figure 2 est une vue en coupe axiale des moyens de guidage de la bougie et d'une partie de la virole externe de la chambre de combustion de la figure 1;
- la figure 3 est une vue de dessus de la virole externe, illustrant les fissures ou criques pouvant apparaitre dans le cas de l'art antérieur ;
- la figure 4 est une vue en perspective d'une partie d'un ensemble selon une forme de réalisation de l'invention, vue de l'aval vers l'amont ;
- la figure 5 est une vue en perspective d'une partie d'un ensemble selon l'invention, vue de l'amont vers l'aval ;
- la figure 6 est une vue de détail et en perspective illustrant en particulier les déflecteurs ;
- la figure 7 est une vue schématique, de détail, illustrant une variante de réalisation,
- la figure 8 est une vue en perspective illustrant la platine et une partie des moyens de guidage, selon une forme de réalisation de l'invention,
- la figure 9 est une vue en perspective illustrant la platine et une partie des moyens de guidage, selon une autre forme de réalisation de l'invention,
- la figure 10 illustrent les moyens de guidage destinés à être montés sur la platine de la figure 9.

### DESCRIPTION DETAILLEE

Les figures 4 à 6 représentent une partie d'un ensemble pour une chambre de combustion 1 d'une turbomachine selon une forme de réalisation de l'invention. L'ensemble comporte une virole annulaire, par exemple la virole externe 3 s'étendant selon un axe longitudinal 7. La virole 3 comporte une paroi intérieure 17 destinée à être tournée vers un foyer de la chambre de combustion 1 et une paroi extérieure 25 opposée à la paroi intérieure 17.

La virole 3 comporte également une ouverture permettant le montage et la fixation d'une platine 30.

La platine 30 comporte, vue radialement de l'extérieur vers l'intérieur, une zone amont 31 de forme hémicirculaire et une zone aval 32 de forme générale carrée ou rectangulaire dont les coins sont arrondis.

La platine 30 comporte une ouverture centrale 33 destinée au passage d'une bougie 12 d'allumage. Ladite ouverture 33 présente ici une forme circulaire. La platine 30 comporte en outre des déflecteurs 34 de forme courbe, par exemple en arc de cercle, de manière à épouser globalement la forme de l'ouverture 33, et situés en aval de l'ouverture 33. La platine 30 comporte ici six déflecteurs 34, par exemple régulièrement espacés axialement les uns des autres. Les déflecteurs 34 peuvent être régulièrement espacés dans un environnement thermique homogène, l'espacement pouvant varier si la zone couverte est importante. La distance axiale entre les déflecteurs 34 est par exemple comprise entre 1 et 5 mm.

Les déflecteurs 34 sont centrés circonférentiellement par rapport à un plan médian 35 passant par l'axe 7 de la virole et par l'axe 37 sensiblement perpendiculaire à l'axe d'élongation de la chambre de l'ouverture de la platine 30. Ce plan 35 est également perpendiculaire à la platine 30.

Les déflecteurs 34 s'étendent circonférentiellement sur une plage angulaire comprise entre 40 et 180 °, ladite plage angulaire étant définie par rapport à l'axe de la cheminée 19.

On notera que, pour chaque déflecteur 34, le déflecteur 34 situé en amont, s'étend sur une plage angulaire plus faible que le déflecteur 34 situé directement en aval. En d'autres termes, les déflecteurs 34 situés à l'amont sont plus courts que les déflecteurs 34 situés à l'aval.

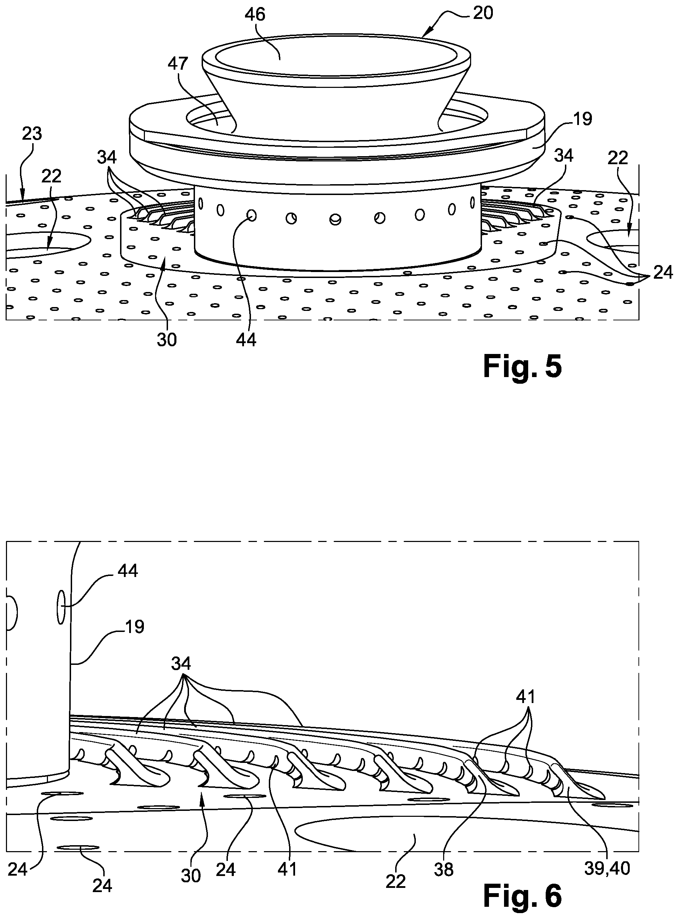

Comme cela est mieux visible à la figure 6, chaque déflecteur 34 comporte une paroi inclinée 38 par rapport à la direction axiale et par rapport à la direction radiale. En particulier, l'angle de la paroi inclinée 38 de l'aval vers l'amont par rapport à la surface radialement externe de la virole 3 est compris entre 10 et 80°. Ladite paroi inclinée 38 de chaque déflecteur 34 est reliée à la platine 30 par une zone de raccordement arrondie 39 formant un congé de raccordement 40. Des perforations 41 sont ménagées dans la platine 30, au niveau du congé de raccordement 40 de chaque déflecteur 34. Les perforations 41 sont par exemple régulièrement réparties le long de chaque déflecteur 34. La platine 30 comporte, pour chaque déflecteur 34, un nombre de perforations 41 compris entre 10 et 50. Chaque perforation 41 s'étend suivant un angle α compris entre 10 et 60°, par exemple de l'ordre de 30° par rapport à la direction axiale. Les perforations 41 ont par exemple un diamètre compris entre 0,2 et 1 mm, de préférence entre 0,4 et 0,6 mm.

Dans la forme de réalisation illustrée aux figures 4 à 6 notamment, les déflecteurs 34 s'étendent par exemple tous radialement sur une même distance.

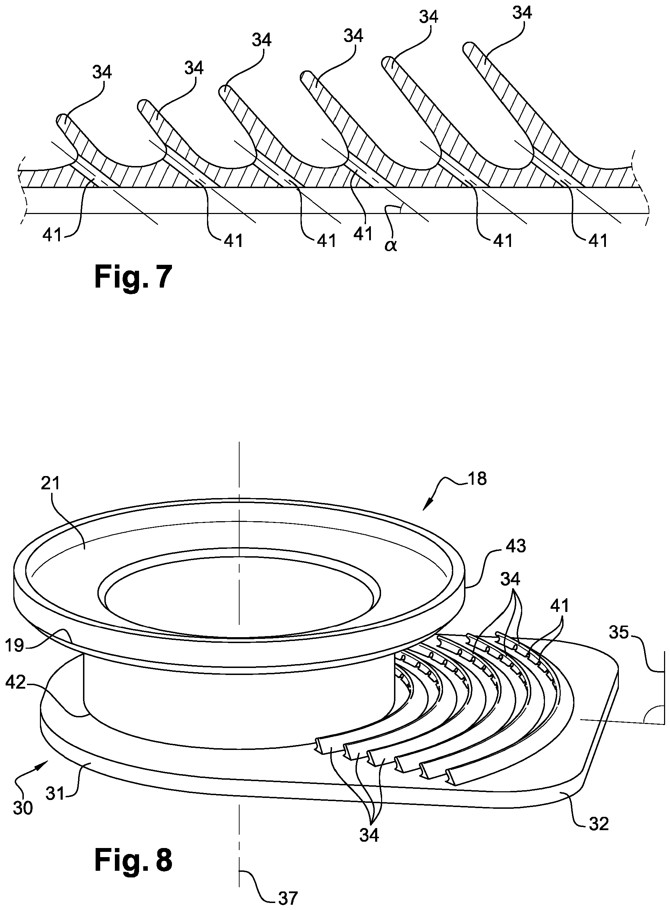

Selon une variante illustrée à la figure 7, la distance d'extension radiale des déflecteurs 34 augmente progressivement de l'amont vers l'aval.

La platine 30 est fixée à la virole 3 par soudage ou par brasage, par exemple.

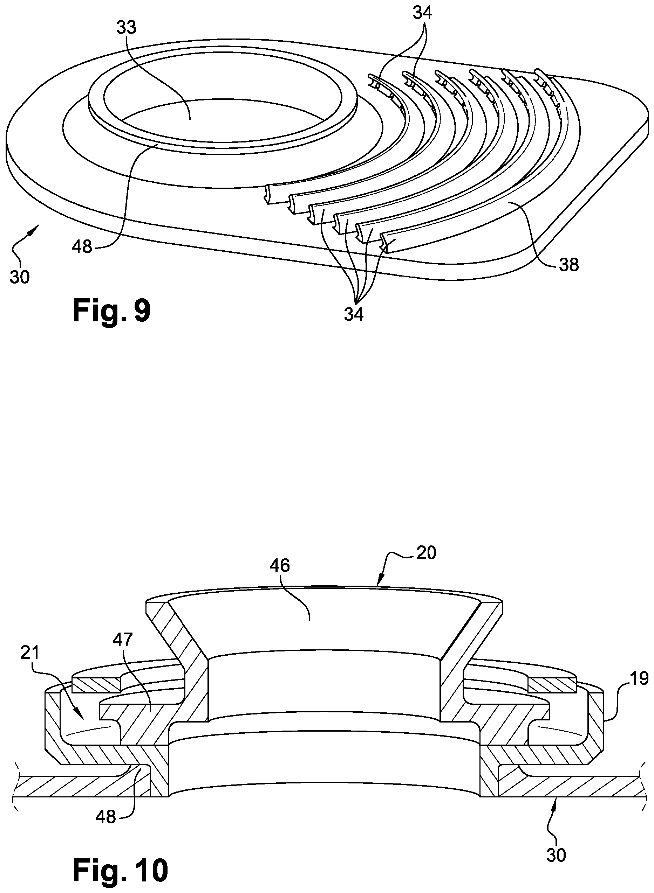

Des moyens de guidage 18 de la bougie 12 sont montés sur la platine 30, au niveau de l'ouverture 33 (figure 9). Les moyens de guidage 18 comportent une cheminée 19 tubulaire présentant une première extrémité 42 fixée à la platine 30, par exemple par soudage, et entourant l'ouverture 33 de la platine 30, et une seconde extrémité 43 opposée, de plus grand diamètre que la première extrémité 42, et délimitant une gorge annulaire 21. La cheminée 12 et la platine 30 peuvent, en variante, être formées d'une seule et même pièce. La cheminée 19 peut comporter des trous 44 orientés perpendiculairement à l'axe 45 de la cheminée 19 et répartis sur la circonférence de la cheminée 19.

Un guide 20 annulaire est monté sur la cheminée 19. Le guide 20 comporte une paroi tronconique 46 s'évasant à l'opposé de la virole 3 et un rebord annulaire 47 monté avec un jeu radial et axial dans la gorge 21 de la cheminée 19, comme cela est connu en soi. La bougie 12 est destinée à être engagée dans le guide 20 et dans la cheminée 19, l'extrémité interne 15 de la bougie 12 traversant l'ouverture 33 de la platine 30, jusqu'à affleurer sensiblement la surface intérieure 17 de la virole 3.

La virole 3 et la platine 30 comportent des perforations 24, appelées également multiperforations 24 du fait de leur nombre important. La virole 3 comporte par ailleurs des trous permettant le passage d'air dit primaire 22 et des trous permettant le passage d'air de dilution 23. Les trous d'air de dilution 23 sont situés axialement en aval des trous d'air primaire 22.

Les multiperforations 24 de la virole 3 et/ou de la platine 30, peuvent présenter un diamètre compris entre 0,2 et 1 mm, de préférence entre 0,4 et 0,6 mm. Les multiperforations 24 peuvent être réalisées par perçage laser.

Les perforations 41 et/ou les multiperforations 24 peuvent être inclinées par rapport à la paroi extérieure 25 de la virole 3, d'un angle α compris entre 10 et 50°, par exemple de l'ordre de 30°. Les perforations 41 et/ou les multiperforations 24 peuvent être situées au moins en partie, dans un plan passant par l'axe 7 de la virole. En variante, une partie au moins des perforations 41 et/ou des multiperforations 24 peut être formée dans un ou plusieurs plans formant un angle avec l'axe 7 de la virole, par exemple un angle compris entre 30 et 90° inclus. De telles perforations 41 ou multiperforations 24 sont qualifiées de giratoires.

Les trous d'air primaire 22 peuvent présenter un diamètre compris entre 5 et 15 mm et les trous d'air de dilution 23 peuvent présenter un diamètre compris entre 4 et 12 mm.

Les multiperforations 24 de la platine 30 peuvent être réalisées après fixation de la platine 30 sur le reste de la virole 3.

La platine 30 et la virole 3 peuvent être formées d'une seule et même pièce. De manière générale et de façon structurelle, on peut considérer que la platine 30 est une partie de la virole 3.

Les figures 9 et 10 illustrent une autre forme de réalisation, qui diffère de celle exposée précédemment en ce que la platine 30 comporte un rebord annulaire 48 s'étendant radialement vers l'extérieur et entourant l'ouverture 33 de la platine 30. La seconde extrémité 43 de la cheminée 19 forme un épaulement annulaire radial, en appui sur l'extrémité externe du rebord 48. Le rebord 48 est formé de façon monobloc avec la platine 30.

La platine 30 peut être réalisée par un procédé de fabrication additive, notamment pas fusion ou frittage sélective de poudres à l'aide d'un laser ou d'un faisceau d'électrons, par exemple. La platine 30 est par exemple réalisée. La virole 3 est par exemple réalisée en alliage à base de cobalt, tel qu'un alliage de type Hastelloy ou HA188.

La virole peut être une virole radialement externe, comme décrit précédemment, ou une virole radialement interne 4 d'une chambre de combustion de turbomachine.

Les déflecteurs 34 en aval des moyens de guidage 18 permettent d'amener une partie du flux d'air 49 (représenté en figure 4) dévié par l'élément en saillie 18 vers la zone 26 moins favorisée par la circulation du flux d'air 49. L'air pénètre ensuite dans la chambre de combustion 1, au travers des perforations 24, 41. Ceci permet d'améliorer sensiblement le refroidissement de la virole 3, 4 dans la zone 26 située directement en aval de l'élément en saillie 18. On notera que tout ou partie des déflecteurs 34 s'étendent circonférentiellement de part et d'autre de la cheminée 19 de manière à capter et guider une plus grande partie du flux d'air 49 vers la zone 26 concernée.

On notera que l'invention est applicable à tout élément en saillie 18 de la virole 3, 4, et n'est pas limitée au cas de moyens de guidage 18 d'une bougie 12.

## Revendications

1. Ensemble pour une chambre de combustion (1) d'une turbomachine, comportant une virole annulaire (3, 4) s'étendant selon un axe longitudinal (7), ladite virole (3, 4) comportant une paroi intérieure (17) destinée à être tournée vers un foyer de la chambre de combustion (1) et une paroi extérieure (25) opposée à la paroi intérieure (17), un élément (18) en saillie s'étendant radialement depuis une zone de la paroi extérieure (25), **caractérisé en ce que** la virole (3, 4) comporte au moins une pluralité de déflecteurs (34) en saillie depuis la paroi extérieure (25) et situés en aval de l'élément (18) en saillie par rapport à un sens de circulation des gaz le long de la paroi extérieure (25), orienté selon l'axe longitudinal (7), chaque déflecteur (34) s'étendant circonférentiellement, les déflecteurs (34) étant décalés axialement les uns des autres, des perforations (41) étant ménagées dans la virole (3, 4), axialement entre l'élément (18) en saillie et le ou chaque déflecteur (34), et axialement entre les déflecteurs (34) , les perforations (41) débouchant au niveau de la paroi intérieure (17) et de la paroi extérieure (25), au moins un déflecteur (34) étant incliné axialement vers l'amont par rapport à la paroi extérieure.

2. Ensemble selon la revendication 1, **caractérisé en ce que** le déflecteur (34) présente une forme générale courbe.

3. Ensemble selon la revendication 1 ou 2, **caractérisé en ce qu'**au moins un déflecteur (34) s'étend circonférentiellement par rapport à l'élément en saillie (18) de part et d'autre de l'élément en saillie (18).

4. Ensemble selon l'une des revendications 1 à 3, **caractérisé en ce que** certaines au moins des perforations (41) sont situées à proximité du déflecteur (34).

5. Ensemble selon l'une des revendications 2 à 4, la distance entre l'extrémité extérieure de chaque déflecteur (34) et la paroi extérieure (25) de la virole (3, 4) augmente progressivement de l'amont vers l'aval.

6. Ensemble selon l'une des revendications 1 à 5, **caractérisé en ce qu'**il comporte une platine (30), les déflecteurs (34) étant formés sur la platine (30), l'organe en saillie (18) étant monté ou formé sur la platine (30), la platine (30) étant fixée sur la virole (3, 4) et formant une partie de ladite virole (3, 4).

7. Ensemble selon l'une des revendications 1 à 6, **caractérisé en ce que** l'élément en saillie (18) comporte des moyens de guidage (18) d'une bougie d'allumage (12).

8. Turbomachine pour un aéronef, **caractérisé en ce qu'**elle comporte un ensemble selon l'une des revendications 1 à 7.

## Patentansprüche

1. Anordnung für eine Brennkammer (1) eines Turbotriebwerks, enthaltend einen Mantelring (3, 4), der sich entlang einer Längsachse (7) erstreckt, wobei der Mantelring (3, 4) eine Innenwand (17), die dazu bestimmt ist, einem Brennraum der Brennkammer (1) zugewandt zu sein, und eine der Innenwand (17) entgegengesetzte Außenwand (25) aufweist, wobei sich ein vorspringendes Element (18) radial von einem Bereich der Außenwand (25) aus erstreckt, **dadurch gekennzeichnet, dass** der Mantelring (3, 4) zumindest eine Mehrzahl von Deflektoren (34) aufweist, die von der Außenwand (25) vorspringen und sich in Bezug auf eine in der Längsachse (7) ausgerichtete Gasströmungsrichtung entlang der Außenwand (25) stromabwärts des vorspringenden Elements (18) befinden, wobei sich jeder Deflektor (34) in Umfangsrichtung erstreckt, wobei die Deflektoren (34) axial zueinander versetzt sind, wobei axial zwischen dem vorspringenden Element (18) und dem bzw. jedem Deflektor (34) und axial zwischen den Deflektoren (34) Durchbrüche (41) in dem Mantelring (3, 4) ausgebildet sind, wobei die Durchbrüche (41) im Bereich der Innenwand (17) und der Außenwand (25) ausmünden, und wobei zumindest ein Deflektor (34) in Bezug auf die Außenwand stromaufwärts axial geneigt ist.

2. Anordnung nach Anspruch 1, **dadurch gekennzeichnet, dass** der Deflektor (34) eine gekrümmte Form aufweist.

3. Anordnung nach Anspruch 1 oder 2, **dadurch gekennzeichnet, dass** sich zumindest ein Deflektor (34) in Bezug auf das vorspringende Element (18) in Umfangsrichtung auf beiden Seiten des vorspringenden Elements (18) erstreckt.

4. Anordnung nach einem der Ansprüche 1 bis 3, **dadurch gekennzeichnet, dass** sich zumindest einige der Durchbrüche (41) in der Nähe des Deflektors (34) befinden.

5. Anordnung nach einem der Ansprüche 2 bis 4, wobei der Abstand zwischen dem äußeren Ende jedes Deflektors (34) und der Außenwand (25) des Mantelrings (3, 4) von stromaufwärts nach stromabwärts progressiv zunimmt.

6. Anordnung nach einem der Ansprüche 1 bis 5, **dadurch gekennzeichnet, dass** sie eine Platte (30) enthält, wobei die Deflektoren (34) an der Platte (30) ausgebildet sind, wobei das vorspringende Element (18) an der Platte (30) angebracht oder ausgebildet ist, und wobei die Platte (30) an den Mantelring (3, 4) befestigt ist und einen Teil des Mantelrings (3, 4) bildet.

7. Anordnung nach einem der Ansprüche 1 bis 6, **dadurch gekennzeichnet, dass** das vorspringende Element (18) Führungsmittel (18) für eine Zündkerze (12) enthält.

8. Turbotriebwerk für ein Luftfahrzeug, **dadurch gekennzeichnet, dass** es eine Anordnung nach einem der Ansprüche 1 bis 7 enthält.

## Claims

1. An assembly for a combustion chamber (1) of a turbomachine, comprising an annular shell (3, 4) extending along a longitudinal axis (7), said shell (3, 4) comprising an inner wall (17) intended to be turned towards a furnace of the combustion chamber (1) and an outer wall (25) opposite the inner wall (17), a projecting element (18) extending radially from an area of the outer wall (25), **characterized in that** the shell (3, 4) has at least one plurality of deflectors (34) projecting from the outer wall (25) and located downstream of the projecting element (18) with respect to a direction of gas flow along the outer wall (25), oriented along the longitudinal axis (7), each deflector (34) extending circumferentially, the deflectors (34) being axially offset from each other, perforations (41) being provided in the shell (3, 4), axially between the projecting element (18) and the or each deflector (34), and axially between the deflectors (34), with the perforations (41) opening at the inner wall (17) and the outer wall (25), at least one deflector (34) being inclined axially in the upstream direction with respect to the outer wall.

2. An assembly according to claim 1, **characterized in that** the deflector (34) has a general shape of a curve.

3. An assembly according to claim 1 or 2, **characterized in that** at least one deflector (34) extends circumferentially with respect to the projecting element (18) on either side of the projecting element (18).

4. An assembly according to one of claims 1 to 3, **characterized in that** at least some of the perforations (41) are located in the vicinity of the deflector (34).

5. An assembly according to one of claims 2 to 4, the distance between the outer end of each deflector (34) and the outer wall (25) of the shell (3, 4) gradually increases in the downstream direction.

6. An assembly according to one of claims 1 to 5, **characterized in that** it comprises a plate (30), the deflectors (34) being formed on the plate (30), the projecting element (18) being mounted or formed on the plate (30), the plate (30) being attached on the shell (3, 4) and forming a part of said shell (3, 4).

7. An assembly according to one of claims 1 to 6, **characterized in that** the projecting element (18) has means (18) for guiding a spark plug (12).

8. A turbomachine for an aircraft, **characterized in that** it comprises an assembly according to one of claims 1 to 7.
